Europäisches Patentamt

European Patent Office

Office européen des brevets

(11) Publication number: **0 079 729**
**A2**

## (12) EUROPEAN PATENT APPLICATION

(21) Application number: **82305882.1**

(22) Date of filing: **05.11.82**

(51) Int. Cl.³: **G 12 B 5/00**

(30) Priority: **12.11.81 US 320509**

(43) Date of publication of application:
**25.05.83 Bulletin 83/21**

(84) Designated Contracting States:
**DE FR GB**

(71) Applicant: **Northern Technologies Limited**
**25 Torbay Road**
**Markham Ontario, L3R 1H1(CA)**

(72) Inventor: **Dickie, Robert G.**
**273 Parway Avenue**
**Keswick Ontario(CA)**

(74) Representative: **MacGregor, Gordon et al,**
**ERIC POTTER & CLARKSON 14 Oxford Street**
**Nottingham, NG1 5BP(GB)**

(54) **Display device with internally adjustable CRT tube.**

(57) The invention relates to a display device which includes a cathode ray tube (CRT) having a viewing surface, for example, television sets, computer terminals, word processor terminals, equipment used in electronic mail applications and video text applications, display monitors, etc. In accordance with the invention, the CRT per se is pivotable whereby the attitude of the viewing surface of the device can be altered independent of its enclosure. In accordance with an embodiment, the CRT is mounted on a pivoting axis, and is pivoted about this axis by, for example, a motor assembly, or a manual arrangement.

FIG 1

## DISPLAY DEVICE WITH INTERNALLY ADJUSTABLE CRT TUBE

BACKGROUND OF INVENTION

(a)  Field of the Invention

The invention relates to a display device which includes a cathode ray tube (CRT) having a viewing surface. More specifically, the invention relates to such a device wherein the CRT is pivotable to adjust the attitude of the viewing surface.

(b)  Description of Prior Art

Display devices of the above kind consist for example, of television sets, computer terminals, word processor terminals, and equipment used in electronic mail applications, and video text applications, display monitors, etc. and are well known in the art.

Recently ergonomics and human engineering for viewer comfort in display devices of this type have been receiving significant attention. As a result of this, it is desirable to adjust the attitude of the viewing screens of the devices which are generally vertical, and to date, such adjustment has been accomplished by moving the cabinetry, in which the CRT tube is solidly fixed, via manual and/or mechanical means. Two varients of this approach are typefied with the Visual Technologies, Facit, IBM 3101, Tec. Ergo, and Tandberg display devices.

Visual Technologies uses a one-piece cabinet which is tilted via a single levelling device on the bottom front of the cabinet. IBM 3101 Facit Ergo, Tec. Ergo, and Tandberg use a two-piece cabinet consisting of a base or pedestal which allows the top part of the cabinet (containing the CRT tube) to be pivoted about a horizontal axis.

In the first of the methods, the objective of moving the entire mass of a full cabinet has presented considerable problems. Significant structural changes must be incorporated, and this increases mechanical costs. In addition, positioning has been prone to accidental movements, and positioning is inaccurate due to limitations of ratchet or friction type tilting mechanisms. Specifically, the ratchet mechanisms have a limited number of discrete positions, while the friction lock, which overcomes the above, requires a significant initial force to initiate motion with the resulting kinetic energy of then propelling the monitor past the desired position.

In the second approach, costs are considerably increased due to a two or more part cabinet requirement. In addition, positioning errors, as per the single cabinet above mentioned, enter into the second approach as well as the weight is not that significantly reduced with the two-cabinet approach.

SUMMARY OF INVENTION

It is therefore an object of the invention to provide a display device, having a generally vertical CRT viewing surface, wherein the attitude of the viewing surface can be adjusted with greater control, flexibility, for greater user convenience, and less cost than is possible with prior art designs.

It is a more specific object of the invention to provide such a display device wherein the CRT per se is pivotable within its enclosure and relative to its enclosure to adjust the attitude of the viewing surface of the display terminal, without altering the attitude of the enclosure.

In accordance with a particular embodiment of the invention, there is provided, a display device including CRT having a viewing surface, said CRT being pivotably mounted in an enclosure such that the viewing surface thereof is exposed, characterized in that said CRT is pivotable relative to said enclosure, whereby to alter the attitude of said viewing surface without altering the attitude of said enclosure.

In accordance with a further embodiment of the invention, a display device comprises: an enclosure; a CRT having a viewing surface and being pivotably mounted on mounting means about a pivoting axis in said enclosure; means for pivoting said CRT and about said pivoting axis; whereby to change the attitude of said viewing surface without altering the attitude of said enclosure.

BRIEF DESCRIPTION OF DRAWINGS

The invention will be better understood by an examination of the following description together with the accompanying drawings in which:

FIGURE 1 illustrates a system for pivoting a CRT in accordance with one embodiment of the invention;

FIGURE 2 illustrates a system for pivoting a CRT in accordance with a second embodiment of the invention;

FIGURE 3 shows the CRT mounted in a cabinet; and

FIGURE 4 is a section through IV-IV of the cabinet only of Figure 3.

DESCRIPTION OF PREFERRED EMBODIMENTS

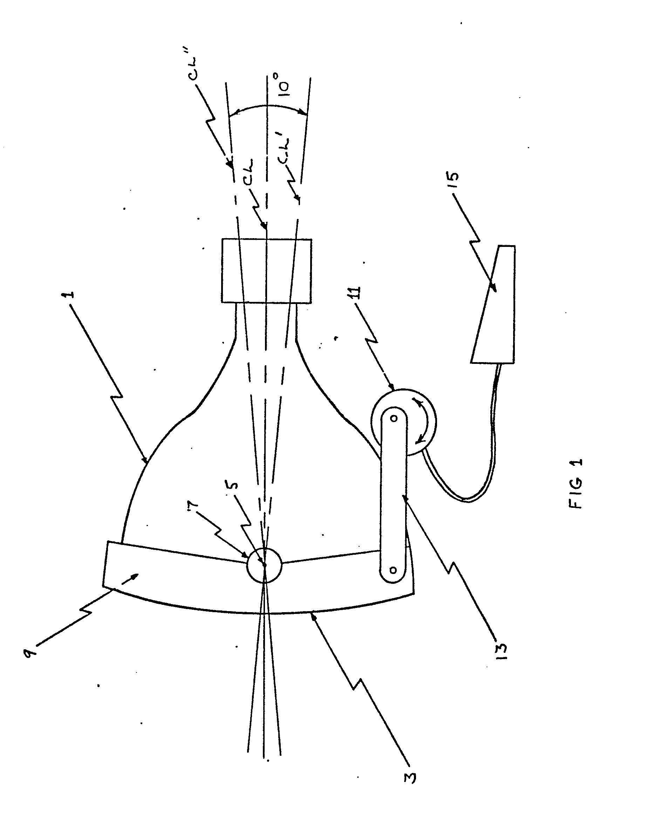

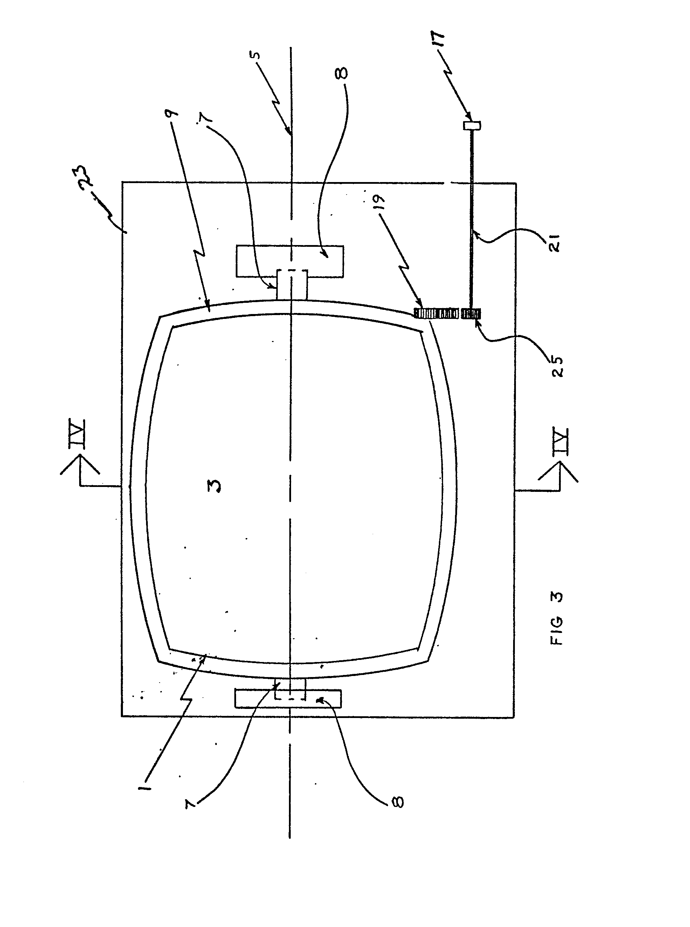

Referring to Figure 1, there is illustrated a CRT 1 having a viewing surface 3 mounted for pivoting about an axis 5 (see also Figure 3). As shown in Figure 1, the viewing surface in a display device is mounted generally vertically. By pivoting the CRT, the viewing face angle can be either increased or decreased as will be discussed below.

Means 7 are provided for mounting the CRT on the pivoting axis 5 as will be described below. As such means may not be easily mountable on the CRT itself, in one embodiment of the invention, a bezel 9 is provided. The bezel 9 circles the viewing surface of the CRT and also has side edges extending over the side surfaces of the CRT as well as top and bottom edges extending over the top and bottom surfaces of the CRT. The means for mounting 7 would then be attached to or be part of the bezel 9. It is possible that in the future CRTs may be made which will include the means for mounting 7. Under these conditions, it will of course not be necessary to use a bezel for this purpose.

The CRT is then connected to a rotatable member 11 via a linkage arm 13. As can be seen, in the embodiment of Figure 1, the arm 13 is connected to 11 at a point remote from the center of rotation of 11. In the embodiments illustrated in Figure 1, the rotating means constitutes a motor assembly which is controllable by a control means 15. As is known, the motor assembly can be controlled to rotate in either a clockwise or counter-clockwise direction. In the illustrated embodiment, if the motor assembly is caused to rotate in a counter-clockwise direction, then the viewing angle will be increased such that the center line of the CRT will move from an initial position CL to a second position CL'. If the motor assembly is caused to rotate in a clockwise direction, then the viewing angle will be decreased, and the center line will move from CL to a position CL".

As is clearly shown in Figure 1, the linkage arm is attached, at one end thereof, to the motor assembly, and, at the other end thereof, to the bezel. Again, it is possible that in the future CRTs will include either the linkage arm attached or means for attaching the linkage arm, so that once again the need for a bezel for this purpose will be negated.

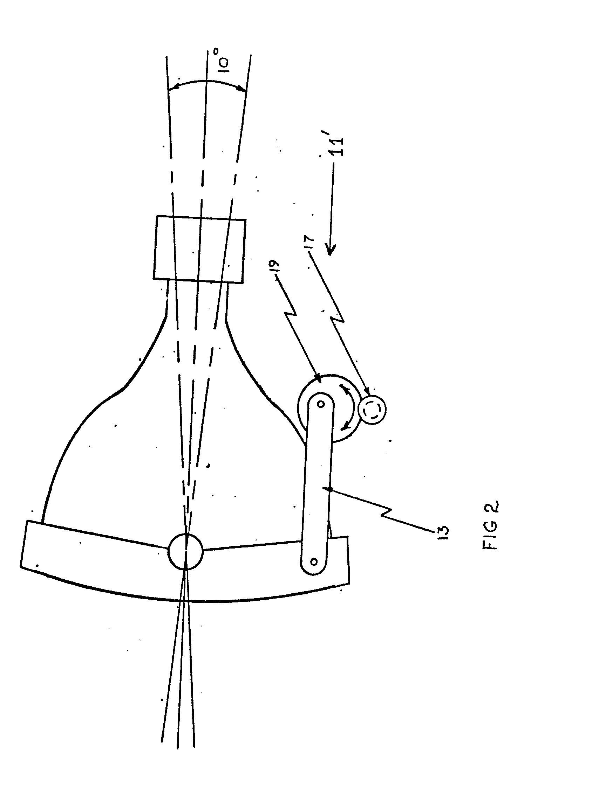

Turning now to Figure 2, the rotating means, illustrated generally at 11', constitutes a friction brake arrangement including a rotatable member such as wheel 19 and a knob 17. The wheel 19 is linked to the CRT at a point remote from the center of rotation of 19. As can be seen in Figure 3, the knob 17 is connected to a smaller wheel 25 by a shaft 21. When the knob 17 is rotated manually, the smaller wheel 25 turns and therefore the wheel 19 will also be rotated whereby, once again, to adjust the attitude of the viewing surface.

Referring once again to Figure 3, we can see that the means for mounting 7 in this embodiment constitutes studs 7'. Brackets 8 will be attached to the inside front of the cabinet 23. Studs 7 will fit into holes in brackets 8. Thus, the CRT is pivotable relative to the cabinet about the axis 5.

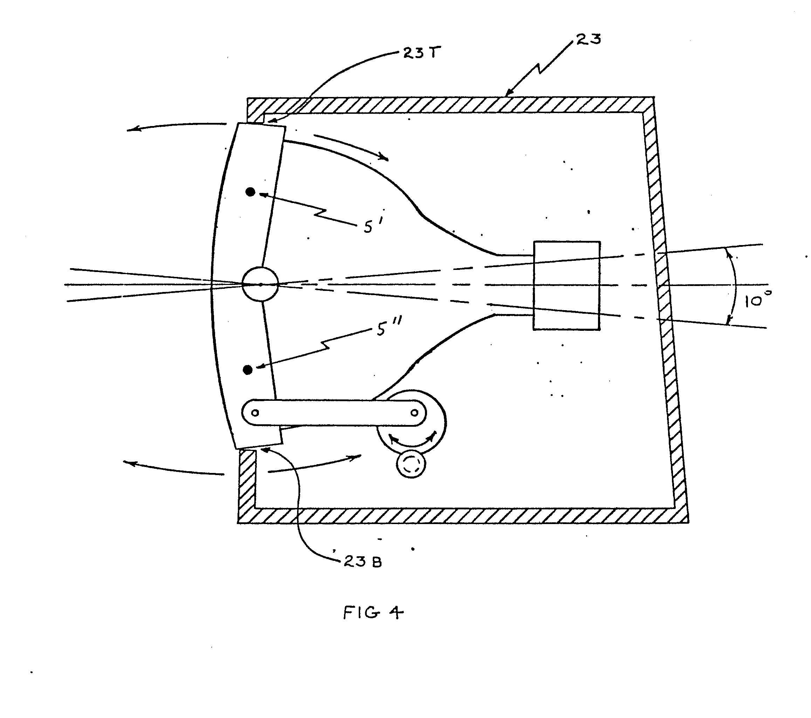

Preferably, the pivoting axis 5 runs through the balance point of the CRT. As most of the weight in the CRT is at the front end, the balance point will be close to the viewing surface of the CRT and on the center line CL of the CRT. The reason for having the pivoting axis pass through the balance point is to reduce the amount of effort needed to pivot the CRT. In addition, with the pivoting axis being close to the viewing surface of the CRT, the top and bottom edges of the CRT face will not experience any substantial motion up and down when the CRT is being pivoted. Instead, the top and bottom edges of the CRT face will move forwardly and rearwardly, so that only a small gap needs to be left between the top front edge 23T and the bottom front edge 23B of the enclosure 23 (see Figure 4) and the top and bottom of the CRT. The same advantage could be gained if the pivoting axis of the CRT is disposed close to the front face but not on the center line of the CRT. For example, the CRT could be pivoted about an axis at 5' or 5" in Figure 4. However, it is realized that if either of these two axes is used, then it will require a greater effort to pivot the CRT.

It can be seen that with the inventive display device, the entire system can be maintained in a one-piece cabinet thus reducing the cabinetry cost relative to the two-piece cabinet arrangements. Structural problems do not arise in that it is a smaller mass (the CRT tube only) which is being pivoted and moved.

In addition, as the movable portion is internal to the enclosure, there is less danger of accidental movement. Therefore, positional stability is improved.

It is also possible with the present arrangement to position the tube in any of an infinite number of positions. Thus, with the present arrangement, the use of a ratchet-type lock is avoided, and, in one embodiment, an electronic control device could control the motor assembly as well known in the art to therefore position the attitude of the viewing surface in an infinite number of positions within the travel limits of the CRT.  With the manual arrangement, the friction brake system also permits positioning in
an infinite number of positions within the travel limits of
the CRT.

The motor assembly embodiment also permits remote
adjustability.  Thus, by using a control means 15 (see
Figure 1), electrically connected to the motor and wheel
assembly 11, an operator could maintain his operating position
while adjusting the viewing surface.  This is in contrast to
present arrangements whereby the operator must move his body
to adjust the attitude of the viewing screen, and then return
to his operating position to determine whether or not the
adjustment has been properly made.

As above mentioned, the particular pivoting arrangement is not the only arrangement possible and other pivoting
arrangements as is well known in the art are considered to be
within the scope of the invention.  For example, the studs
could extend from the sides of the brackets and holes could
be made in the sides of bezel.

It will of course be appreciated that the invention
could be utilized for the purpose of providing horizontal
movement of the CRT screen.  In order to provide such horizontal movement, the pivoting axis would extend vertically
instead of horizontally.  Thus, the embodiments illustrated
in Figures 1, 2 and 4 would become top views instead of side
views, and the illustration of Figure 3 would be turned on
its side.

It would of course be possible to provide both the
horizontal and vertical motion by providing two sets of pivots
within arrangements as well known in the art.

Although particular embodiments have been described,
this was for the purpose of illustrating, bot not limiting,
the invention.  Various modifications, which will come
readily to the mind of one skilled in the art, are within
the scope of the invention as defined in the appended claims.

CLAIMS

1.  A display device comprising:

an enclosure;

a CRT having a viewing surface and being pivotably mounted on mounting means about a pivoting axis, in said enclosure;

means for pivoting said CRT and about said pivoting axis;

whereby to change the attitude of said viewing surface without altering the attitude of said enclosure.

2.  A display device as defined in Claim 1 wherein said means for pivoting comprises:

rotating means;

linkage means for attaching said rotating means to said CRT;

whereby, when said rotating means is rotated, said CRT will be pivoted about said pivoting axis, whereby to adjust the attitude of said viewing surface without altering the attitude of said enclosure.

3.  A display device as defined in Claim 2 wherein said rotating means comprises electrical rotating means including a motor assembly; said linkage means attaching said motor assembly to said CRT; whereby, when said motor assembly is operated, said CRT will be pivoted above pivoting axis, whereby to adjust the attitude of said viewing surface without adjusting the attitude of said enclosure.

4.  A display device as defined in claim 2, wherein said rotating means comprises manual rotating means including a friction brake system having a knob and wheel connected by shaft means, whereby, when said knob is rotated, said wheel will also rotate; said linkage means attaching said wheel to said CRT; whereby, when said knob is rotated, said CRT will be pivoted about said pivoting axis whereby to adjust the attitude of said viewing surface without adjusting the attitude of said enclosure.

5. A display device as defined in Claim 3 or 4 wherein said CRT includes top and bottom surfaces;

bezel means circling the front viewing surface of said CRT and top and bottom and side edges of said bezel extending, respectively, along the top and bottom and side edges of said CRT, said bezel being movable with said CRT;

said mounting means extending from the side edges of said bezel means;

said linkage means being attached, at one end thereof to said motor assembly, and, at the other end thereof, to one side edge of said bezel means.

6. A display device as defined in Claim 4 or 5 wherein said mounting means comprises stud and bracket arrangements, said studs being mounted on the side edges of said bezel means, said brackets extending from and being firmly fixed to the inside front surface of said enclosure.

7. A display device as defined in any preceding claim wherein said viewing surface is generally vertical;

and wherein said pivoting axis is substantially horizontal.

8. A display device as defined in Claim 7, wherein said CRT includes a side surface on each side of said viewing surface extending substantially at right angles to said side surfaces;

said mounting means being aligned on said side surfaces and at right angles thereto.

9. The display device recited in Claim 1 and further comprising:

a rotatable member; and

a linkage connected to said member remote from its axis of rotation and connected to said CRT at a point remote from its axis of rotation.

10. A method of altering the attitude of the viewing surface of a CRT in an enclosure comprising:-

pivoting said CRT about an axis of rotation;

rotating a rotatable member having a linkage connected to said member remote from its centre of rotation and connected to said CRT at a point remote from its centre of rotation, whereby the attitude of said CRT is altered without altering the attitude of said enclosure.

FIG 1

0079729

FIG 2

FIG 3

0079729

FIG 4